# EUROPEAN PATENT APPLICATION

(11) **EP 2 858 352 A1**
(43) Date of publication of application: **08.04.2015**
(21) Application number: 13306375.0
(22) Date of filing: 03.10.2013
(51) Int. Cl.: H04N 7/15, H04L 12/18, G06Q 10/06, G06Q 10/10

(54) **A method for managing video conference resources**

(71) Applicant: ALCATEL LUCENT, 92100 Boulogne-Billancourt (FR)
(72) Inventor: Bletterie, Philippe, 92707 Colombes (FR); Abou-Chakra, Rabih, 92707 Colombes (FR); Fadili, Moulay, 92707 Colombes (FR)
(74) Representative: Loyer & Abello

(57) **Abstract**

A method for scheduling several video-conferences in a video conferencing server having resources, the method comprising :
- receiving (1) a video-conference booking request, ;
- detecting (2) available resources of the video conferencing server during the timeslot requested ;
- detecting booked video-conferences during the requested timeslot;
- analyzing (7) resources booked and selecting (6) at least one booked video-conference, the selected at least one booked video-conference having resources booked being at least equal to the missing resources needed for the video-conference booking request ;
- accessing (12) user calendar data of each user of the selected booked video conference to find a new timeslot which and/or a new location is suitable for each user ;
- freeing (8) resources booked for selected booked video conference ;
- allocating (9) the freed resources to the video-conference booking request.

## Description

### Field of the invention

The invention relates to a method for scheduling several video-conferences in a video conferencing server.

### Background

Along with the increase of bandwidth capabilities in communication systems, video communication systems have become increasingly popular in both business and residential applications. Indeed, in the case of geographically distributed team collaboration, these systems avoid the travelling of the team collaborators and increase flexibility.

Videoconferencing technologies use video and audio communication to allow to a plurality of people to communicate at a same time, for instance for meeting activities. Furthermore, besides the audio and visual transmission of meeting activities, videoconferencing technologies can be used to share documents and display information.

Each user participating to a videoconference is filmed by a camera which generates a video stream representing the user in his/her own environment.

During a Video conference, all captured video streams from N users are sent to a video conference server. The video conference server then generates conference video streams from received captured video streams. The generated conference video streams are sent to each user participating to the video conference.

However, video conference servers have limited resources for managing such video conferences. Especially, video server has a limited number of video ports, which are the necessary resources for a user device to connect to the server during a video conference. Thus, the number of possible connected user device at the same time is limited to the number of ports available on the server, each user device using one port to participate to his/her own video-conference. Consequently, the number of video conference during the same period is also limited by the number of ports of the video server.

When a user programs a video conference on a video system, he declares the number of user device who will join the video conference. Therefore, the necessary associated video resources are reserved in the video server for the video conference's period. Only a limited number of resources, or none, remain available for future booking during the same period.

### Summary

In an embodiment, the invention provides a method for scheduling several video-conferences in a video conferencing server, the video conferencing server having resources to establish video conferences between a plurality of client devices, the method comprising :
- receiving a video-conference booking request, said booking request comprising a priority level, a timeslot, and user profile data for each user participating to said video-conference ;
- detecting available resources of the video conferencing server during the timeslot requested in the booking request are not sufficient for the videoconference booking request ;
- detecting booked video-conferences during the requested timeslot which has a lower priority than the priority of the booking request ;
- analyzing resources booked for detected booked video conference having a lower priority level than the priority level of the video-conference booking request and selecting at least one booked video-conference having a lower priority level than the priority level of the video-conference booking request, the selected at least one booked video-conference having resources booked being at least equal to the missing resources needed for the video-conference booking request ;
- accessing user calendar data of each user of the selected booked video conference to find a new timeslot which and/or a new location is suitable for each user ;
- freeing resources booked for selected booked video conference ;
- allocating the freed resources to the video-conference booking request.

According to embodiments, such method may comprise one or more of the features below.

In an embodiment, the user calendar data includes timeslot availability data of the user and geographical position of the user.

In an embodiment, the calendar data of the users is accessed on a calendar server separated from the video conference server.

In an embodiment, the method further includes the step of sending a notification indicating the new timeslot and/or new location to the users of the selected booked video-conference.

In an embodiment, the notification includes an approval request of the new timeslot, the method further repeating the step of analyzing user profile data of each user of the selected booked video-conference to find another available timeslot for each user if at least one user does not approve the new timeslot.

In an embodiment, the method further includes the steps of :
- analyzing geographical localization of the users of the selected booked video conference to detect a plurality of users located in a same geographical area;
- freeing the resources booked for the plurality of users located in the same geographical area;
- allocating to the booked video conference limited resources corresponding to the resources needed for a single user device for the detected plurality of users located in the same geographical area,
and wherein the notification indicates to the plurality of users located in the same geographical area that the new location of the booked video conference is the location of the single user device located in the geographical area. In an embodiment, the at least one selected booked video-conference comprises the booked video-conference having the smallest number of users.

In an embodiment, the at least one selected booked video-conference comprises the booked video-conference having the shortest timeslot booked.

In an embodiment, the resources include communication ports of the video conference server.

In an embodiment, the method further including the step of detecting a flag in the booking request, such a flag corresponding to a priority level associated to a user profile.

In an embodiment, the invention also provides a video processing server for scheduling several video-conferences having a module able to execute the method according to here above cited method.

In an embodiment, the invention also provides a computer program comprising computer-executable instructions that perform the above-mentioned method when executed, and a computer that comprises said computer program.

The invention originates from the observation that when an user has an important video-conference to schedule, he/she have to schedule his/her video-conference according to the free timeslots of the users participating to the video conference and according to the resources available in the video server during the selected timeslot for the video conference.

An idea on which the invention is based on is to manage a high priority unscheduled video call, which could be emergency video call, when there are no more, or not enough, video ports/resources available in the video server for the selected timeslot. Another aspect of the invention is to minimize the impact for the already scheduled video conferences (pre-reserved video ports). Another aspect of the invention is to propose effective alternative of re-scheduling(s) for video-conference(s) having a lower priority. Another aspect of the invention is to limit the impact of the high priority video conference on the video-conference(s) having a lower priority level according to specific criteria, for instance limiting the impact to the minimum number of impacted users or to the minimum time impact on the vide-conference(s) scheduled. Another aspect of the invention is to propose an alternative solution when possible.

### Brief description of the drawings

These and other aspects of the invention will be apparent from and elucidated with reference to the embodiments described hereinafter, by way of example, with reference to the drawings.
- Figure 1 is a diagram representing the steps performed by a video server performing a priority booking management of the method of an embodiment of the invention.;
- Figure 2 is a diagram representing additional steps performed by a video server performing the method of figure 1 in an embodiment;
- Figure 3 illustrates schematically an embodiment of a video conference server performing the method illustrated in figure 1 in the case wherein video conferences are already scheduled for a timeslot and not enough resources are available for a higher priority level video-conference to schedule.

### Detailed description of the embodiments

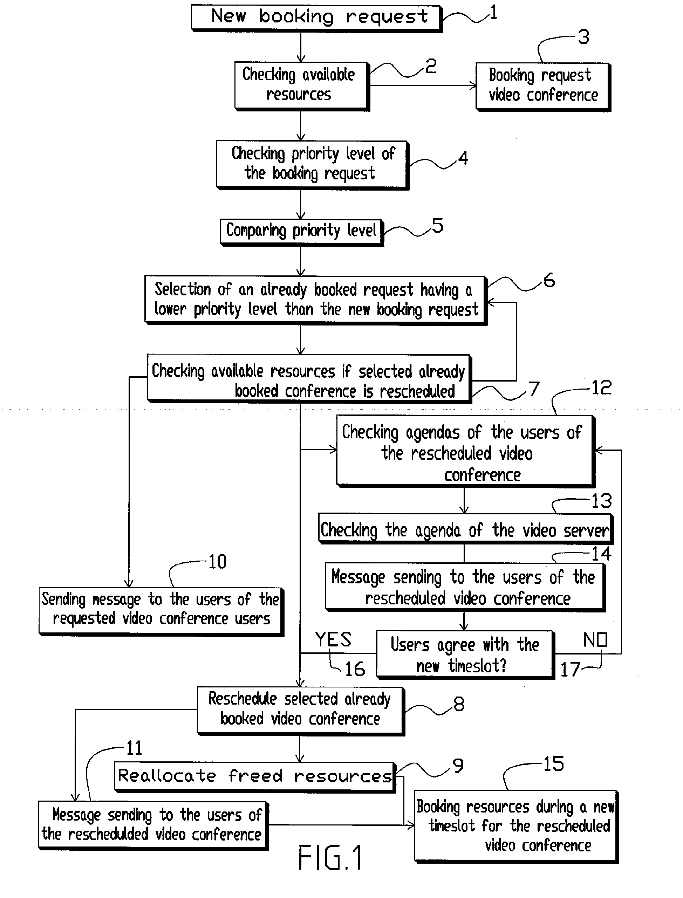

Figure 1 is a diagram representing the steps performed by a video server performing a priority booking management.

During a video conference, all the users participating to the video conference and their respective user devices are generally located in different places. Each user device includes a capture device, for instance a camera, to capture an individual video stream representing the user in his/her environment. Each user device may be for instance a personal computer, a mobile phone, a tablet or any other device having a capture device and a display device. All the captured individual video streams are transmitted to the video server. The video server then generates a video conference stream for each user device by mixing the individual video streams received. The generated video conference streams are then sent to all user devices participating to the video conference. Each user watches his/her video conference stream on a personal display device.

In such a video conference, a bidirectional communication channel is established between the video server and each user device. Such a communication channel is able to carry a video stream in both directions. In use, the communication channel carries the captured individual video stream from the user device to the video server in one direction and the generated video conference stream from the video server to the user device in the other direction. The number of user devices able to have a video conference using the video server during a period, also called timeslot, is then limited by the number of communication channels that the video server can establish. The number of communication channels that the video server can establish depends on the number of ports of the video server. In fact, each communication channel between a user device and the video server requires one port of the video server.

When a user wants to schedule a video conference, he/she has to send a request to the video server in order to book the needed resources for the video conference for the desired timeslot. Such a booking request has to indicate the number of user devices which will be connected to the video server during the video conference. The booking request has also to indicate the timeslot requested for the video conference.

When the video server receives a new video conference booking request (step 1), the video server analyses the booking request. The video server checks (step 2) his booking register, working as a calendar, to determine if the resources needed for the video conference booking request are available during the requested timeslot. If the resources for the video conference are available during the requested timeslot, the video server books the video conference and the necessary ports/resources for the requested timeslot (step 3).

If the needed resources for the requested video conference are not available at the specified timeslot, the video server may alert the requesting user that resources are not available at the requested timeslot. The user may then limit the resources needed for the video conference, for instance by limiting the number of connected user devices, or to choose another timeslot.

However, some video conferences have a higher priority level than others. For instance, if a user has very limited timeslot possibilities for scheduling a video conference, or if a video conference has to be scheduled quickly to solve a problem on a project before the project deadline, there is a need to perform this high priority video conference and to manage both the already booked video conferences and the high priority video conference booking request.

As illustrated in figure 1, the method for scheduling several video conferences in a video server includes a step of checking the priority of the received booking request (step 4). The video conference priority level can be linked to a lot of different criteria. For instance, some users are granted to flag a video conference booking request with a high priority level. A High priority level could also be managed through an emergency code, such code being sent by the user to the video server. An example of priority code could be a simple code number, each booking request having a code number.

When the video server receives a new booking request (step 1), and if not enough resources are available to book said video conference, the video server checks the priority level of the booking request (step 4). The video server compares the priority level of the video conference booking request to the priority level of the already booked video conferences (step 5). If the video conference booking request has a higher priority level than some of the already booked video conferences, the video server selects (step 6) at least one of the already booked video conferences to reschedule in order to free resources for the higher priority level video conference booking request. The video server selects (step 6) the booked video conference(s) to reschedule only among all those which have a lower priority level than the priority level of the video conference booking request.

If a plurality of video conferences have a lower priority level than the booking request for the requested timeslot, the video server can choose, according to a plurality of criteria, which video has to be impacted by the high priority video conference request.

Typically, the video server selects (step 6) a first already booked video conference to reschedule according to chosen criteria. Then, the video server checks if there would be enough resources available in the server for the requested video conference if the selected video conference was rescheduled, i.e if the selected video conference has booked resources in the video server at least equal to the missing resources needed to perform the requested video conference.

If the resources available in the video server would be enough to perform the requested video conference by rescheduling the selected video conference, the video server reschedules (step 8) the selected already booked video conference and reallocates (step 9) its freed resources to the requested video conference.

Otherwise, if the resources available in the video would not be enough to perform the requested video conference even if the selected already booked video conference were rescheduled, the video server repeats the step of checking and selecting an already booked video conference (step 6) in order to free more resources. The video server checks (step 6) again if the resources freed by rescheduling the plurality of selected video conferences would be enough to perform the requested video conference. The video server repeats these steps of selecting (step 6) and checking available resources (step 7) until enough resources are freed to perform the requested video conference or until the video server detects that even if all the already booked video conferences having a lower priority level than the booking request are rescheduled, there is not enough resources to perform the requested video conference.

If the resources needed to perform the requested video conference are available by rescheduling the selected already booked video conference(s), said selected already booked video conference(s) are rescheduled (step 8) and their freed resources are reallocated to the requested video conference (step 9).

If not enough resources could be freed to perform the requested video conference even by rescheduling already booked video conference(s), the video server sends a message to the users of the requesting the video conference (step 10) to inform them that the requested video conference is not possible at the requested timeslot. The video server asks them to choose another timeslot or to limit the requested resources.

Regardless of the chosen video conference to reschedule, the users of such a rescheduled video conference have to be notified that their video conference is rescheduled. The video server sends a message (step 11) to each users of the video conference to reschedule in order to inform them that the scheduled video conference has been rescheduled.

According to an embodiment, the video server has an access to the calendar of each user participating to a booked video conference. The access to the calendar of the users can be made by a plurality of embodiments, for instance by accessing to another server including said calendar data.

When the server has selected a video conference to reschedule, it checks the calendar of each user participating to the selected video conference (step 12) in order to find another timeslot during which all the users of the selected video conference are available for another video conference. When such another timeslot is detected, the video server checks its own calendar (step 13) to check if necessary resources are available for performing the video conference to reschedule during the timeslot detected as being available for all users participating to said video conference to reschedule. Typically, video server uses the features of the video conference to reschedule (number of user devices, duration of the video conference, etc.) in order to book a new timeslot detected as being available for all users of the video conference to reschedule and during which the resources/ports needed for said rescheduled video conference are available in the video server. The steps of checking all user's calendars and checking the calendar of the video server are repeated as many times as needed to find the closest timeslot being available for both all the users of the video conference to reschedule and the video server. When such a new timeslot is detected, the video server sends a message (step 14) to the users of the video conference to reschedule, i.e to re-schedule, in order to inform them of the new timeslot for the video conference.

In an embodiment, the video server simply reschedules the selected already booked video conference (step 8) and reallocates the resources of the selected video conference to the requested video conference (step 9). Then, the video server books the detected new timeslot for the rescheduled video conference (step 15) without asking confirmation from the users, as their calendars have already been checked.

In another embodiment, the message sent (step 14) by the video server includes an approval request. Such an approval request asks to each user participating to the video conference to re-schedule if they agree with the new timeslot selected. If all users agree with the new timeslot proposed in the approval request, they send back a positive message to the video server. When the video server receives (step 16) a positive answer to the approval request from all the users of the video conference to reschedule, the video server reschedules the selected video conference (step 8) and reallocate the resources of the rescheduled video conference to the requested video conference (step 9). The video server also books the resources needed for the rescheduled video conference (step 15), during the new selected timeslot.

If at least one user does not agree with the selected new timeslot, he/she can send a negative answer to the video server. In case of receiving a negative answer to at least one of the approval requests (step 17), the video server searches another timeslot for which all users of the rescheduled video conference are available (step 12) and then checks if resources to perform the rescheduled video are available during the detecting timeslot (step 13). When another available timeslot is detected for both all users and the video server, the video server sends another message (step 14) to all users of the video conference to re-schedule, with or without an approval request.

In an embodiment, the steps of detecting an available timeslot for all the user of the video conference to reschedule and sending an approval request for the selected new timeslot are repeated until all users accept the proposed timeslot.

The users may send a feedback with a negative answer, for instance by completing their answer with the reason of their negative answer. Such reason may correspond to an option included in the approval request, for instance an indication of the latest date before which the conference must be rescheduled.

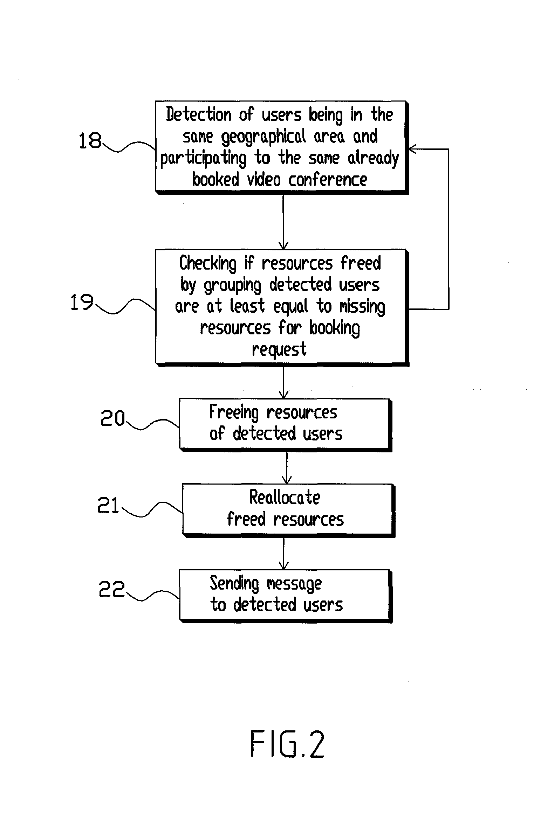

Figure 2 is a diagram representing additional steps performed by a video server performing the method of figure 1 in an embodiment.

In an embodiment, before rescheduling an already booked video conference, the video server analyzes the geographic position of each users participating to the already booked video conferences. The geographical position of each user can, for instance, be accessible directly in the calendar of each user or can be a specific data indicated for each user device in the video booking request.

In this embodiment, when the video server detects that not enough resources are available for a booking request (step 2), the video server checks if at least two users using two different user devices and participating to one of the already booked video conference are located in the same geographical area (step 18). If user devices participating to an already booked video conference are detected as being located in the same geographical area, the video server checks (step 19) if the resources missing for the booking request could be freed by grouping the detected users detected as being located in the same geographical area on one common user device. If some resources could be freed by regrouping users located in the same geographical area, the video server frees (step 20) the booked resources for at least one of the detected user devices. The video server reallocates said freed resources (step 21) to the video conference booking request. Then, the video server sends an information message (step 22) to the users who are located in the same geographical area and are participating to the same video conference in order to inform them that the resources booked for their video conference are limited. The message indicates to these users that they are grouped together on only one user device and that they have to share this user device, e.g a video conference meeting room.

If the available resources which could be freed by regrouping users participating to the already booked conference located in the same geographical area are not sufficient to permit the performing of the requested video conference, then the video server checks if there are other users participating to another already booked video conference who are located in the same geographical area (step 18) and checks (step 19) the resources available if said users are grouped on a common user devices. If requested resources could be available, said resources are freed (step 20) and reallocated (step 21). If there are no users participating to the same video conference and being located in the same geographical area during the requested timeslot, then the video server has to reschedule a video conference with a lower priority than the video conference booking request. The step of detection of geographical area (18) of the users participating to already booked video conferences can be performed just after the step of checking the available resources in the video server (step 2) and before the step of priority checking (step 4). Said step of priority checking (step 4) is then performed only if the resources which could be freed by grouping users are not sufficient.

This embodiment avoids aborting a booked video conference every time a high priority video conference is requested and that not enough resources are available for said high priority video conference request. This is permitted by the optimization of the number of user devices used in a video conference according to the geographical localization of the users participating to such a video conference.

Preferably, the video server selects at first the users being in the same geographical area and participating to the booked video conference including the highest number of user devices. This selection limits the impact on already booked video conferences. Even in the already booked video conference having the highest number of user devices, the video server limits, if possible, the number of impacted users to the necessary number of users to group in order to free only the missing resources for the video conference booking request with higher priority. Video server limits the number of impacted user devices in an already booked video conference, i.e the video server preferably impacts users of said booked video conference located in the same geographical area. For instance, when five users are participating to the same video conference, if three users are located in a first geographical area and the two others are both located in a second geographical area and, if the server needs to free resources for two user devices, the video server will free resources by grouping the three users located in the first geographical area. This impacts a lower number of users than grouping two users in the first geographical area and two users located in the second geographical area.

The video server tries at first to maintain all the booked video conferences by regrouping users located in the same geographical area and, at a later stage, if there are not enough resources which could be freed by regrouping user located in the same geographical area to perform the video conference booking request, the video server reschedules at least one of the already booked video conferences having a lower priority level. In order to limit the number of rescheduled video conferences, the server can also check if enough resources could be freed to perform the requested video conference by grouping users and rescheduling at least one already booked video conference in this case. Typically, the steps of detecting users located in the same geographical area (step 18) and checking if enough resources could be freed to perform the requested video conference can be made after the step of checking the resources freed by a selected video conference to reschedule (step 7). In this way, if the resources which could be freed by rescheduling an already booked video conference are not sufficient to perform the requested video conference, the video server checks if the resources freed by the selected rescheduled video conference and by regrouping users of the remaining already booked video conference located in the same geographical area would be enough to perform such requested video conference without rescheduling another video.

If the priority level of the already booked video conferences does not permit to select any already booked video conference to reschedule or that not enough resources could be freed to perform the booking request, the video server sends a message (step 10) to the users participating to the requested video conference to inform them that the video server is not able to perform the requested video conference for the selected timeslot. The video server then either invites them to choose another timeslot or invites them to accept another timeslot selected by the video server as being available. Such a selected timeslot can be selected by the method describe above when the video server check for a new timeslot for a rescheduled video conference. A specific message can be sent if the video server is physically not able to perform the requested video conference, for instance if the number of user devices is too high for the total resources of the video server.

The selection of which video conference should be rescheduled can be made according to a plurality of criteria. For instance, the booked video conference to reschedule can be video conference booking the shortest timeslot, limiting the impact of such a rescheduling on the calendar of video server. The selection can also be made in order to limit the impact on the number of users, for instance by selecting the booked video conference reserving the fewest resources, and also reserving at least the resources needed for the video conference booking request.

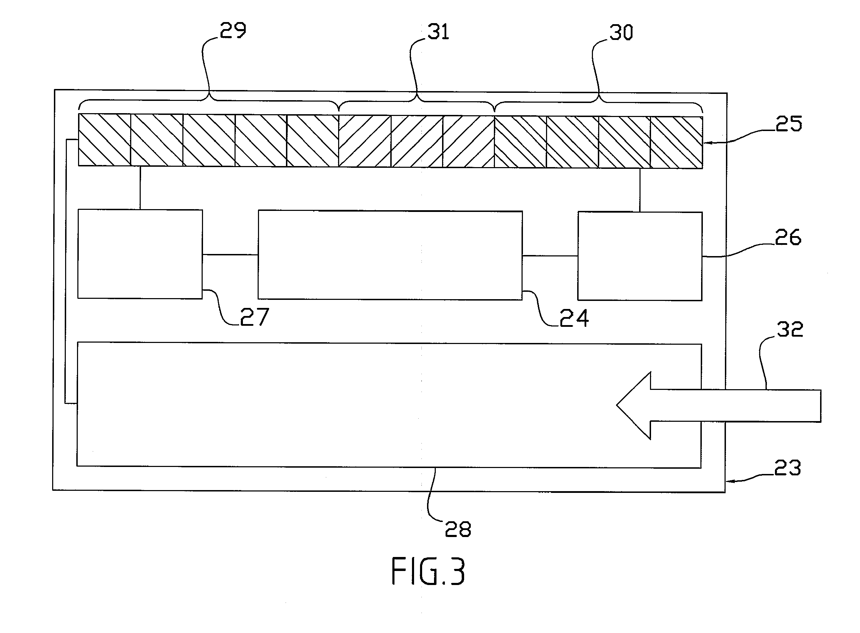

The figure 3 illustrates schematically an embodiment of a video conference server performing the method illustrated in figure 1 in the case wherein video conferences are already scheduled for a timeslot and not enough resources are available for an higher priority level video-conference to schedule.

In figure 3, a video server 23 includes a video conference stream generating module 24, a plurality of communication ports 25, a decoding module 26 and an encoding module 27. Such a video server 23 is, for instance, a device including a Multiparty Conference Unit (MCU) but could also be a video switching based communication system or any other device adapted for offering videoconferencing capabilities. The video server also includes a video conference management module 28. The video conference management module 28 receives booking requests from users who want to use the video server 23 to establish a video conference at a specific timeslot.

In the example illustrated in figure 3, the video server 23 has a total of twelve communication ports. The video server 23 has, for a defined timeslot, a first video conference booked 29, a second video conference booked 30 and a third video conference booked 31. The priority level of each booked video conference is determined by a code number, e.g between "1" and "5", the higher priority level being "5" and the lowest priority level being "1". For illustration only and in a non-limitative way, figure 3 represents the resources booked during the timeslot of the longest booked video conference. All the other booked video conference(s) have their booked timeslot included in the timeslot of the longest booked video conference

The first video conference 29 books five ports of the video server 23 for fives user devices. Three user devices of the first booked conference are located in the same building, i.e in the same geographical area, and the two others are each one located in a different geographical area. The video server resources needed for this first video conference are booked for a timeslot of one hour. The priority level of the first booked conference is "2".

The second video conference 30 books four ports of the video server 23 for four user devices. Two user devices of the second booked conference are located in the same building, i.e in the same geographical area, and the two other ones are each one located in a different geographical area. The video server resources needed for this second video conference are booked for a timeslot of three hours. The priority level of the second booked video conference is "1".

The third video conference 31 books three ports of the video server for three user devices. Each user is located in a different geographical area. The video server resources needed for this third video conference are booked for a timeslot of half an hour. The priority level of the second booked video conference is "3".

In figure 3, the video conference management module 28 receive a new booking request 32 for the represented timeslot, i.e for the timeslot in which the first video conference 29, the second video conference 30 and the third video conference 31 are booked. The booking request 32 is made for four user devices located in different geographical areas and for three hours. The priority level of the booking request is "4".

When it receives the booking request, the video conference management module 28 first checks (step 2 of figure 1) if the requested resources are available for the requested timeslot. As the three already booked video conferences book the twelve ports of the video server 23, there are no more available ports for the booking request. To avoid to have to reschedule an already booked video conference, the video conference management module checks if some users participating to the same already booked video conference are located in the same geographical area (step 18 of figure 2). The video conference management module detects that three user devices in the first video conference 29 are located in the same geographical area. The video conference management module also detects that two user devices in the second video conference 30 are located in the same geographical area.

Only two communication ports of the video server could be freed by regrouping the three users participating to the first video conference 29 in the same geographical area. Only one port could be freed by regrouping the two users participating to the second video conference 30 located in the same geographical area. Consequently, there could be only three ports freed by regrouping users participating to the same video conference and located in the same geographical area. The number of ports of the video server which could be freed for the booking request by regrouping users of the already booked video conferences does not permit to perform the requested video conference.

As it is not possible to allocate enough resources to the booking request, the video server has to reschedule an already booked video conference. The video conference management module 28 then compares the priority level of the booking request to the already booked video conferences (step 5 of figure 1). As all the already booked video conferences have a lower priority than the booking request, at least one of the three already booked video conferences may be rescheduled to perform the requested video conference.

In the example of figure 3, the video conference management module selects the video conference to reschedule in order to limit the number of users participating to a video conference impacted.

As the first video conference 28 has booked five ports, reschedule the first video conference could permit to perform the requested video conference and would impact five users.

As the second video conference 30 is booked for only three users, the second video conference alone could not free enough resources to permit the requested video conference. Consequently, if the second video conference 30 is rescheduled, the first booked video conference 29 and/or the third booked video conference 31 have to be rescheduled too in order to free enough resources to perform the requested video conference. This means that at least seven users (three users for the second video conference 30 and four users for the third video conference 31) should be impacted to perform the requested video conference.

As the third video conference 31 has booked four ports, reschedule the third video conference 31 could permit to perform the requested video conference and would impact only four users.

The video conference management module then selects to reschedule the third video conference to impact the minimal number of users (step 6 of the figure 1).

In a non-illustrated embodiment, the video conference management module could select the video conference(s) to reschedule according to the priority level of the already booked video conference(s), for instance by rescheduling the already booked conference(s) having the lowest priority level. In the example illustrated in figure 3, such a selection made according to the priority level would impact the second video conference, which priority level is 1, and the first video conference, which priority level is 2. The video conference management module could also select the video(s) to reschedule according to any other appropriate criteria, for instance according to the duration of the timeslot.

Once the video conference to reschedule has been selected, the video conference management module checks the calendar of the four impacted users (step 12 in figure 1) and checks its own calendar (step 13 in figure 1) to find a new timeslot for which the four users are available. The video conference management module then send message (step 14 in figure 1) including an approval request to the four participants of the third booked video conference 31 to inform them that their video conference has been rescheduled and to get their approval on the new timeslot selected to re-schedule said third video conference. As all users are available during the proposed timeslot, all the users approve the proposed timeslot and send a positive answer to the approval request (step 16 of figure 1). When it receives all the approval answer, the video conference management module 28 frees the resources booked for the third video conference (step 8 in figure 1) and reallocates (step 9 in figure 1) said resources to the video conference booking request. Finally, the video conference management module 28 books the third video conference 31 for the new timeslot selected.

As an alternative, the video server could have selected to reschedule the second video conference and could have grouped the users of the first video conference located in the same geographical area to free the missing resources. Such an alternative limits the impact of rescheduled video conferences.

The invention is not limited to the described embodiments. The appended claims are to be construed as embodying all modification and alternative constructions that may be occurred to one skilled in the art, which fairly fall within the basic teaching here, set forth. The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps. The invention may be implemented by means of hardware as well as software. The same item of hardware may represent several "means".

## Claims

1. A method for scheduling several video-conferences in a video conferencing server, the video conferencing server having resources to establish video conferences between a plurality of client devices, the method comprising :
- receiving (1) a video-conference booking request, said booking request comprising a priority level, a timeslot, and user profile data for each user participating to said video-conference ;
- detecting (2) that available resources of the video conferencing server during the timeslot requested in the booking request are not sufficient for the videoconference booking request ;
- detecting booked video-conferences during the requested timeslot which have a lower priority than the priority of the booking request (4, 5);
- analyzing (7) resources booked for detected booked video conference having a lower priority level than the priority level of the video-conference booking request and selecting (6) at least one booked video-conference having a lower priority level than the priority level of the video-conference booking request, the selected at least one booked video-conference having resources booked being at least equal to the missing resources needed for the video-conference booking request ;
- accessing (12) user calendar data of each user of the selected booked video conference to find a new timeslot and/or a new location which is suitable for each user ;
- freeing (8) resources booked for selected booked video conference ;
- allocating (9) the freed resources to the video-conference booking request.

2. A method according to claim 1, wherein the user calendar data includes timeslot availability data of the user and geographical position of the user.

3. A method according to anyone of claims 1 to 2, wherein the calendar data of the users is accessed on a calendar server separated from the video conference server.

4. A method according to anyone of claims 1 to 3, the method further including the step of sending (14, 22) a notification indicating the new timeslot and/or new location to the users of the selected booked video-conference.

5. A method according to claim 4, wherein the notification includes an approval request of the new timeslot, the method further repeating the step of analyzing user profile data of each user of the selected booked video-conference to find another available timeslot for each user if at least one user does not approve the new timeslot (17).

6. A method according to claim 4, the method further including the steps of :
- analyzing (18) geographical localization of the users of the selected booked video conference to detect a plurality of users located in a same geographical area;
- freeing (20) the resources booked for the plurality of users located in the same geographical area;
- allocating to the booked video conference limited resources corresponding to the resources needed for a single user device for the detected plurality of users located in the same geographical area,
and wherein the notification indicates to the plurality of users located in the same geographical area that the new location of the booked video conference is the location of the single user device located in the geographical area.

7. A method according to anyone of claims 1 to 6, wherein the at least one selected booked video-conference comprises the rescheduled video-conference having the smallest number of users.

8. A method according to anyone of claims 1 to 6, wherein the at least one selected booked video-conference comprises the booked video-conference having the shortest timeslot booked.

9. A method according to anyone of claims 1 to 8, wherein the resources include communication ports of the video conference server.

10. A method according to anyone of claims 1 to 9, the method further including the step of detecting a flag in the booking request, the flag corresponding to a priority level associated to a user profile.

11. A video processing server for managing a plurality of videoconferencing client devices having a management module able to execute all the steps of the method according to anyone of claims 1 to 10.

12. A computer program comprising computer-executable instructions that perform all the steps of the method according to any one of claims 1 to 10 when executed

13. A computer comprising a computer program according to claim 12.
